# FASCICULE DE BREVET EUROPEEN

(11) **EP 0 615 500 B1**
(45) Date de publication et mention de la délivrance du brevet: **20.11.1996**
(21) Numéro de dépôt: 93920710.6
(22) Date de dépôt: 13.09.1993
(51) Int. Cl.: B62D 5/06

(54) **DISPOSITIF DE COMMANDE HYDRAULIQUE A VALVE MOBILE**
HYDRAULISCHE LENKVORRICHTUNG MIT BEWEGLICHEM VENTIL
HYDRAULIC CONTROL DEVICE INCLUDING A MOVABLE VALVE

(30) Priorité: 15.10.1992 ES 9202046
(43) Date de publication de la demande: 21.09.1994
(73) Titulaire: ALLIEDSIGNAL AUTOMOTIVE ESPANA, S.A., 08400 Barcelona (ES)
(72) Inventeur: CORTES GUASCH, Esteve, E-08304 Mataro Barcelone (ES); BACARDIT, Juan, Simon, E-08013 Barcelone (ES)
(74) Mandataire: Allen, William Guy Fairfax
(86) Numéro de dépôt international: EP9302474
(87) Numéro de publication internationale: WO9408834

(56) Documents cités:
- EP-A- 0 321 756
- WO-A-89/07064
- WO-A-92/03326
- US-A- 3 315 570

## Description

La présente invention concerne un dispositif de commande hydraulique comprenant d'une part une valve mobile suivant une direction axiale à l'intérieur d'un boîtier étanche rempli d'un fluide dont l'écoulement est au moins contrôlé par cette valve, et d'autre part des moyens d'ouverture permettant d'obtenir de façon sélective l'ouverture de cette valve mobile lorsqu'elle est déplacée, sous l'effet d'une première force axiale d'intensité supérieure à un premier seuil, jusqu'à une position d'ouverture, et de choisir cette position d'ouverture dans une plage de positions possibles s'étendant suivant la direction axiale, les moyens d'ouverture comprenant : une butée montée coulissante dans un logement axial en vis-à-vis de la valve, cette butée présentant une extrémité au contact de laquelle cette valve peut s'ouvrir lorsqu'elle s'y trouve sollicitée par la première force axiale ; des moyens de blocage de la butée susceptibles d'empêcher la butée de coulisser dans son logement.

Un dispositif de ce type est décrit dans le document WO-A-9203326.

Plus généralement, de tels dispositifs sont notamment utilisés pour déterminer la plage de fonctionnement de systèmes de direction à assistance hydraulique pour véhicules à moteur.

Dans ces systèmes, l'assistance à la manoeuvre du volant est obtenue par une modulation de la pression hydraulique dans des chambres complémentaires délimitées par un piston à l'intérieur d'un cylindre, la plage de fonctionnement du système étant déterminée par la course de ce piston.

Cette course est elle-même définie au moyen de valves d'arrêt, ouvertes à la fin de la course du piston grâce au mouvement de ce dernier, et établissant entre les chambres un passage de fluide hydraulique interdisant toute évolution ultérieure de la modulation de pression dans le même sens.

Quel que soit leur mode de réalisation, les dispositifs connus présentent le défaut de requérir, pour le réglage de la position d'ouverture de la valve mobile, un démontage du boîtier dans lequel elle se trouve et/ou le recours à des moyens de réglage supplémentaires relativement importants.

Dans ce contexte, l'invention a pour but de proposer un dispositif de commande hydraulique à valve mobile de structure simple, de fabrication aisée, et permettant néanmoins le réglage de la position d'ouverture de la valve depuis l'extérieur du boîtier dans lequel elle est logée.

A cette fin, le dispositif de l'invention est essentiellement caractérisé en ce que les moyens d'ouverture comprennent un ressort, prisonnier entre le fond du logement et la butée axiale exerçant sur la butée une seconde force axiale opposée à la première et d'intensité inférieure au premier seuil, ce ressort étant suffisamment déformable pour appliquer la seconde force axiale sur la butée quel que soit le point de ladite plage où se trouve l'extrémité de cette butée, et en ce que les moyens de blocage comprennent une vis susceptible de se déplacer dans un alésage au moins partiellement taraudé débouchant dans ledit logement et propre à empêcher, de façon seulement sélective, le coulissement de la butée dans son logement sous l'effet de forces axiales d'intensité inférieure à un second seuil, lui-même supérieur au premier seuil.

Dans le mode de réalisation le plus complet, les moyens de blocage comprennent de préférence un coussinet en appui contre la butée et un ressort comprimé par la vis et appuyant lui-même sur le coussinet.

D'autres caractéristiques et avantages de l'invention ressortiront clairement de la description qui en est faite ci-après, à titre indicatif et nullement limitatif en référence aux dessins annexés dans lesquels :
- La Figure 1 est une vue en coupe d'un dispositif conforme à l'invention, utilisé dans un système vu en coupe partielle.
- La Figure 2 est une vue semblable à celle de la Figure 1, relative à un second mode de réalisation de l'invention.

Les figures représentent une partie d'un système de direction assisté comprenant notamment un boîtier étanche 1 et un piston mobile 2 délimitant au moins une chambre de pression 3 rempli d'un fluide hydraulique.

La chambre 3 est fermée de façon étanche par le piston 2, mais un écoulement de fluide vers l'extérieur de cette chambre est possible, de façon contrôlée, grâce à une valve mobile 4 portée par le piston 2 et se déplaçant avec lui suivant la direction de l'axe 5.

La valve mobile 4 comprend un clapet 4a sollicité contre un siège 4b par un ressort 4c exerçant une force correspondant à un premier seuil.

Il est donc possible, en exerçant sur le clapet 4a une force axiale dirigée vers le haut (dans le sens des figures) et d'intensité supérieure à ce premier seuil, d'ouvrir la valve 4 pour permettre l'écoulement du fluide hors de la chambre 3.

L'ouverture de cette valve est en fait obtenue par l'application du clapet 4a contre l'extrémité 6a d'une butée 6, résultant du mouvement du piston 2 vers le bas sous l'effet d'une force axiale d'intensité supérieure au premier seuil.

Il est donc possible, en choisissant la position de l'extrémité 6a de la butée 6 le long de l'axe 5, de régler la position d'ouverture de la valve 4.

A cette fin, la butée 6 est montée coulissante dans un logement axial 7 sous l'effet d'un ressort 8 prisonnier entre le fond 7a du logement 7 et la butée 6.

Par ailleurs cette dernière est maintenue en place dans son logement grâce à une vis 9 susceptible de se déplacer dans un alésage 10 au moins partiellement taraudé, débouchant dans le logement 7, et rendu étanche vis à vis de l'extérieur grâce à un joint annulaire 11 entourant la vis 9.

La pression régnant dans le logement 7 est la même que celle qui règne dans la chambre 3, la butée 6 n'étant ainsi soumise à aucune force différentielle susceptible de varier avec cette pression.

De préférence, la butée 6 présente un méplat 6b, dont la longueur est au moins égale à la longueur souhaitée de la plage de réglage de la position d'ouverture de la valve.

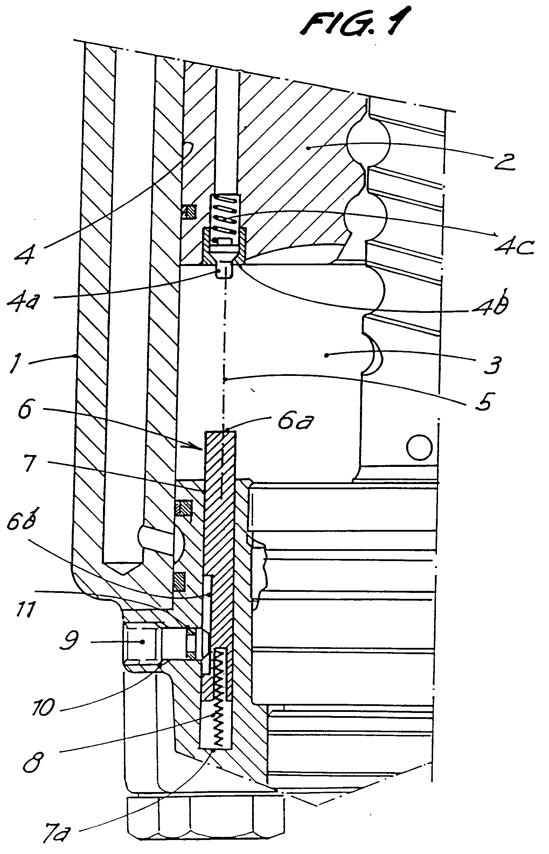

Dans le mode de réalisation de la Figure 1, la vis 9 porte directement sur le méplat 6b et empêche, lorsqu'elle est vissée, la butée 6 de coulisser dans le logement 7, au moins aussi longtemps que les forces axiales auxquelles la butée 6 est éventuellement soumise ont une intensité inférieure à un seuil élevé et très sensiblement supérieur au premier seuil.

En revanche, la longueur et raideur du ressort 8 sont choisies de manière que d'une part ce ressort ne développe, quelle que soit sa position de fonctionnement normal, qu'une force d'intensité inférieure au premier seuil, que d'autre part il pousse, lorsque la vis 9 est dévissée, la butée 6 vers le haut jusqu'à ce que l'extrémité 6a de celle-ci se trouve au point le plus haut de la plage de réglage, et qu'enfin il se trouve encore dans un état de déformation élastique lorsque l'extrémité 6a de la butée est placée au point le plus bas de cette plage de réglage.

Comme l'homme de l'art l'aura déjà compris à la lecture de la description qui précède, le réglage de la position d'ouverture de la valve 4 peut dès lors être réalisé très simplement par les opérations suivantes : la vis 9 est dévissée ; la butée axiale 6 remonte sous l'effet du ressort 8 ; la valve 4 est amenée, par mouvement du piston 2, dans la position où son ouverture est souhaitée, cette valve repoussant alors la butée 6 dans son logement sans s'ouvrir ; enfin, la vis 9 est revissée, calant la butée à l'endroit choisi.

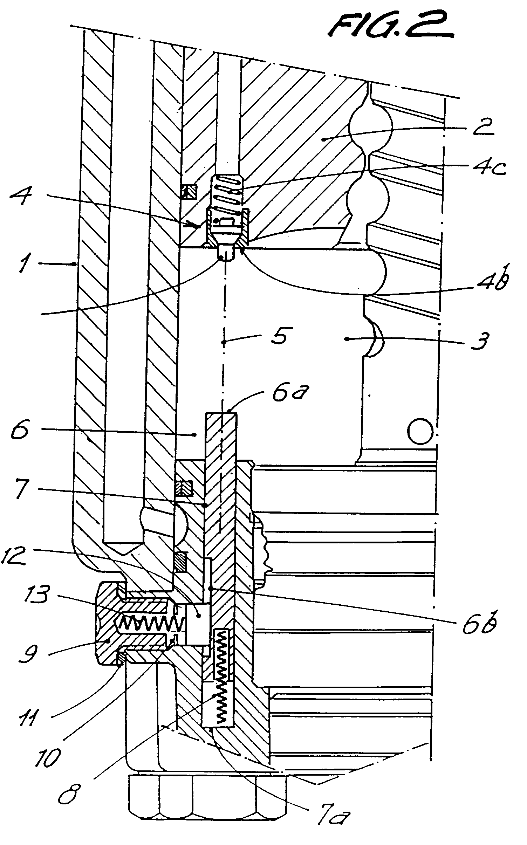

La Figure 2 représente un second mode de réalisation de l'invention, dans lequel la butée 6 est calée grâce à un coussinet 12 en appui contre elle et à un ressort 13 comprimé par la vis 9 et sollicitant le coussinet vers la butée, ce coussinet et ce ressort étant au moins partiellement logés dans l'alésage taraudé 10.

Ce second mode de réalisation, par ailleurs équivalent au premier, permet un ajustage à la fois précis et très aisé de la force de frottement appliquée à la butée 6, donc le réglage du seuil pour lequel les forces axiales susceptibles d'être exercées sur la butée 6 avec une intensité supérieure à ce seuil provoquent le coulissement de la butée 6 dans son logement 7.

## Revendications

1. Dispositif de commande hydraulique comprenant d'une part une valve (4) mobile suivant une direction axiale à l'intérieur d'un boîtier étanche (1) rempli d'un fluide dont l'écoulement est au moins contrôlé par cette valve, et d'autre part des moyens d'ouverture permettant d'obtenir de façon sélective l'ouverture de cette valve mobile lorsqu'elle est déplacée, sous l'effet d'une première force axiale d'intensité supérieure à un premier seuil, jusqu'à une position d'ouverture, et de choisir cette position d'ouverture dans une plage de positions possibles s'étendant suivant la direction axiale, les moyens d'ouverture comprenant :
- une butée (6) montée coulissante dans un logement axial (7) en vis-à-vis de la valve, cette butée présentant une extrémité (6a) au contact de laquelle cette valve peut s'ouvrir lorsqu'elle s'y trouve sollicitée par la première force axiale : et
- des moyens de blocage de la butée (9, 12, 13), susceptibles d'empêcher la butée de coulisser dans son logement,
caractérisé en ce que les moyens d'ouverture comprennent un ressort (8), prisonnier entre le fond (7a) du logement et la butée axiale (6) exerçant sur la butée une seconde force axiale opposée à la première et d'intensité inférieure au premier seuil, ce ressort étant suffisamment déformable pour appliquer la seconde force axiale sur la butée quel que soit le point de ladite plage où se trouve l'extrémité (6a) de cette butée, et en ce que les moyens de blocage comprennent une vis (9) susceptible de se déplacer dans un alésage au moins partiellement taraudé (10) débouchant dans ledit logement (7) et propre à empêcher, de façon seulement sélective, le coulissement de la butée dans son logement sous l'effet de forces axiales d'intensité inférieure à un second seuil, lui-même supérieur au premier seuil.

2. Dispositif suivant la revendication 1, caractérisé en ce que les moyens de blocage comprennent un coussinet (12) en appui contre la butée et un ressort (13) comprimé par la vis et appuyant lui-même sur le coussinet.

## Claims

1. Hydraulic control device comprising, on the one hand, a valve (4) which can be moved along an axial direction inside a sealed casing (1) filled with a fluid whose flow is at least controlled by this valve and, on the other hand, opening means which enable this movable valve to be opened in a selective fashion when it is moved, under the effect of a first axial force of higher intensity than a first threshold, into an open position, and this open position to be chosen from a range of possible positions extending along the axial direction, the opening means comprising:
- a stop (6) slideably mounted in an axial housing (7) facing the valve, this stop having one end (6a) in contact with which this valve can open when it is forced there by the first axial force; and
- means (9, 12, 13) for blocking the stop, capable of preventing the stop from sliding in its housing,
characterized in that the opening means comprise a spring (8), trapped between the bottom (7a) of the housing and the axial stop (6) exerting on the stop a second axial force opposed to the first and of lower intensity than the first threshold, this spring being sufficiently deformable to apply the second axial force to the stop regardless of the point of the said range at which the end (6a) of this stop is located, and in that the blocking means comprise a screw (9) capable of moving in a bore which is at least partially tapped (10) emerging into the said housing (7), and capable of preventing, only selectively, the stop from sliding in its housing under the effect of axial forces of lower intensity than a second threshold, itself higher than the first threshold.

2. Device according to claim 1, characterized in that the blocking means comprise a bearing bush (12) bearing against the stop and a spring (13) compressed by the screw and itself pressing on the bearing bush.

## Patentansprüche

1. Hydraulische Steuervorrichtung, die zum einen ein Ventil (4) aufweist, das entlang einer axialen Richtung im Inneren eines dichten Gehäuses (1) bewegbar ist, das mit einem Fluid gefüllt ist, dessen Fließen wenigstens von diesem Ventil kontrolliert wird, und zum anderen Öffnungsmittel, die ein selektives Öffnen dieses bewegbaren Ventils ermöglichen, wenn es unter der Wirkung einer ersten axialen Kraft mit einer Intensität, die größer als eine erste Schwelle ist, bis in eine Öffnungsposition bewegt wird, und die das Auswählen dieser Öffnungsposition aus einem Bereich von möglichen Positionen ermöglichen, der sich entlang der axialen Richtung erstreckt, wobei die Öffnungsmittel enthalten:
- einen Anschlag (6), der verschiebbar in einer axialen Aufnahme (7) gegenüber dem Ventil angebracht ist, wobei dieser Anschlag ein Ende (6a) aufweist, durch dessen Berührung sich das Ventil öffnen kann, wenn es dort mit der ersten axialen Kraft anliegt; und
- Mittel (9, 12, 13) zum Blockieren des Anschlages, die in der Lage sind, das Verschieben des Anschlages in seiner Aufnahme zu verhindern,
dadurch gekennzeichnet, daß die Öffnungsmittel eine Feder (8) aufweisen, die zwischen dem Boden (7a) der Aufnahme und dem axialen Anschlag (6) gehalten ist und auf den Anschlag eine zweite axiale Kraft ausübt, die zur ersten entgegengesetzt ist und eine geringere Intensität als die erste Schwelle hat, wobei diese Feder ausreichend verformbar ist, um die zweite axiale Kraft auf den Anschlag unabhängig von der Stelle des Bereiches aufzubringen, an der sich das Ende (6a) dieses Anschlages befindet, und daß die Blockiermittel eine Schraube (9) aufweisen, die in der Lage ist, sich in einer wenigstens teilweise mit einem Gewinde versehenen Bohrung (10) zu verstellen, die in die Aufnahme (7) mündet, und die in der Lage ist, in nur selektiver Weise das Verschieben des Anschlags in seiner Aufnahme unter der Wirkung von axialen Kräften zu verhindern, deren Intensität kleiner als eine zweite Schwelle ist, die wiederum großer als die erste Schwelle ist.

2. Vorrichtung nach Anspruch 1, dadurch gekennzeichnet, daß die Blockiermittel ein Andruckteil (12) aufweisen, das an dem Anschlag anliegt, und eine Feder (13), die von der Schraube zusammengedrückt wird und sich ihrerseits an dem Andruckteil abstützt.
